# EUROPEAN PATENT APPLICATION

(11) **EP 4 432 386 A1**
(43) Date of publication of application: **18.09.2024**
(21) Application number: 21963693.3
(22) Date of filing: 15.11.2021
(51) Int. Cl.: H01M 4/13, H01M 4/133, H01M 10/0525

(54) **ELECTRODE AND PREPARATION METHOD THEREFOR, ELECTROCHEMICAL DEVICE, AND ELECTRONIC DEVICE**

(71) Applicant: Ningde Amperex Technology Limited, Ningde, Fujian 352100 (CN)
(72) Inventor: LIU, Mingju, Ningde, Fujian 352100 (CN); LI, Yajie, Ningde, Fujian 352100 (CN); ZHANG, Qingwen, Ningde, Fujian 352100 (CN)
(74) Representative: Icosa
(86) International application number: PCT/CN2021/130626
(87) International publication number: WO 2023/082246

(57) **Abstract**

This application proposes an electrode and a preparation method therefor, an electrochemical apparatus, and electronic apparatus. The electrode includes a current collector and an active material layer disposed on at least one surface of the current collector, where when the active material layer is subjected to thermogravimetric analysis at a temperature rise rate of 10°C/min in an inert atmosphere, a result of the thermogravimetric analysis shows that a mass change of the active material layer at 200°C to 350°C is 0% to 0.2%. In the electrode provided in some embodiments of this application, the active material layer has good conductivity, which is beneficial for increasing the thickness of the active material layer without deteriorating the performance, thereby improving the energy density.

## Description

### TECHNICAL FIELD

This application relates to the field of electrochemical energy storage, and in particular, to an electrode and a preparation method therefor, an electrochemical apparatus and an electronic apparatus.

### BACKGROUND

Electrochemical apparatuses, such as lithium-ion batteries, have the advantages of high energy density, high power, long cycle life, and the like, and therefore are widely used in various fields. With the development of technologies, increasingly high requirements are imposed on the energy density of electrochemical apparatuses. In order to improve the energy density of electrochemical apparatuses, some technologies seek to increase the capacity or voltage of active materials, and other technologies seek to increase the percentage of active materials and reduce the percentage of inactive materials in a unit volume. The percentage of inactive materials can be reduced by reducing the thickness of current collectors or separators, reducing the percentage of inactive materials in the formulation, preparing thicker electrodes, or the like. However, in actual applications, the thicknesses of current collectors and separators both have almost been reduced to the limit, so only the thickness of electrodes can be increased. However, if the thickness of electrodes is increased too much, the performance of electrochemical apparatuses may be affected. Therefore, the thickness of electrodes cannot be greatly increased. Therefore, how the thickness of electrodes is increased as much as possible to increase the capacity of electrochemical apparatuses with ensured performance of the electrochemical apparatuses is an urgent problem to be solved.

### SUMMARY

Some embodiments of this application provide an electrode and a preparation method therefor, an electrochemical apparatus, and an electronic apparatus. When the active material layer of the electrode is subjected to thermogravimetric analysis at a temperature rise rate of 10°C/min in an inert atmosphere, and a result of the thermogravimetric analysis shows that a mass change of the active material layer at 200°C to 350°C is 0% to 0.2%, thereby improving the conductivity of the active material layer, and thus helping to increase the thickness of the active material layer so as to improve the energy density of the electrochemical apparatus.

Some embodiments of this application provide an electrode including a current collector and an active material layer disposed on at least one surface of the current collector, where when the active material layer is subjected to thermogravimetric analysis at a temperature rise rate of 10°C/min in an inert atmosphere, a result of the thermogravimetric analysis shows that a mass change of the active material layer at 200°C to 350°C is 0% to 0.2%. This indicates that a percentage of a polymer compound with a decomposition temperature below 350°C in the active material layer in this application being zero or extremely low helps to improve the ionic and electronic conduction in the active material layer. In some embodiments, the polymer compound with a decomposition temperature below 350°C comes from a binder and/or thickener in the electrode. In some embodiments, the active material layer contains almost no polymer compounds with a low decomposition temperature, which is beneficial for improving the conductivity and thus improving the energy density.

In some embodiments of this application, the result of the thermogravimetric analysis shows that the number of weight loss peaks of the active material layer at 200°C to 350°C is 0, and that the number of weight loss peaks of the active material layer at 350°C to 800°C is not less than 1. This indicates that the active material layer in this application has good conductivity, which is beneficial for increasing the thickness of the electrode, and thus beneficial for increasing the capacity and energy density of the electrochemical apparatus.

In some embodiments, the result of the thermogravimetric analysis shows that a mass change of the active material layer at 350°C to 800°C is 0.21% to 13%. In some embodiments, the result of the thermogravimetric analysis shows that a mass change of the active material layer at 350°C to 800°C is 0.77% to 3.4%.

In some embodiments of this application, the electrode is a negative electrode. In some embodiments, the electrode is a negative electrode, and compacted density ρ of the active material layer is ≥0.6 g/cm³. A relatively high compacted density is beneficial for increasing the energy that the electrochemical apparatus can store per unit volume. In some embodiments, thickness h of the active material layer on one side of the current collector is ≥10 µm. A relatively larger thickness is beneficial for carrying more active materials, thereby increasing the energy density of the electrochemical apparatus. In some embodiments, an adhesion force F between the active material layer and the current collector satisfies: 300 N/m ≥ F ≥ 0.5 N/m, which can ensure a sufficient adhesion force between the active material layer and the current collector, and can also prevent the problem that a too large adhesion force requires an excessive amount of binder which causes decreased conductivity. In some embodiments, resistivity of the active material layer is 0.01 Ω*cm to 50 Ω*cm. This indicates that the active material layer of this application has good conductivity, which is beneficial for the charging and discharging performance of the electrochemical apparatus. In some embodiments, the active material layer includes a negative electrode material, and the negative electrode material includes at least one of lithium titanate, silicon monoxide, graphite, silicon, or hard carbon.

In some embodiments of this application, compacted density ρ of the active material layer satisfies 1.85 g/cm³ ≥ ρ ≥ 0.65 g/cm³, which is beneficial for increasing the energy density of the electrochemical apparatus. In some embodiments, thickness h of the active material layer on one side of the current collector satisfies: 1500 µm ≥ h ≥ 15 µm, which is beneficial for preventing the active material layer from falling off while the energy density of the electrochemical apparatus is increased. In some embodiments, an adhesion force F between the active material layer and the current collector satisfies: 150 N/m ≥ F ≥ 1 N/m, thereby ensuring the conductivity while the adhesion force is increased.

In some embodiments of this application, compacted density ρ of the active material layer satisfies 1.83 g/cm³ ≥ ρ ≥ 1.0 g/cm³. In some embodiments of this application, thickness h of the active material layer on one side of the current collector satisfies 150 µm ≥ h ≥ 30 µm. In some embodiments of this application, adhesion force F between the active material layer and the current collector satisfies: 20 N/m ≥ F ≥ 1 N/m.

In some embodiments of this application, the active material layer includes a conductive agent, where the conductive agent includes at least one of carbon nanotubes, carbon fibers, acetylene black, graphene, Ketjen black, or conductive carbon black. In some embodiments, the active material layer includes a conductive agent, where based on total mass of the active material layer, a mass percentage of the conductive agent in the active material layer is 0% to 2%.

In some embodiments, the active material layer includes a polymer compound, where the polymer compound includes at least one of polyethylene oxide, polypropylene oxide, polyvinylidene difluoride, polytetrafluoroethylene, polyacrylonitrile, polyimide, polysiloxane, polyacrylic acid, polypropylene derivative, sodium carboxymethyl cellulose, lithium carboxymethyl cellulose, polymethylpyrrolidone, polyethylene pyrrolidone, styrene acrylate, or styrene-butadiene rubber. In some embodiments, the active material layer includes a polymer compound, where based on total mass of the active material layer, a mass percentage of the polymer compound in the active material layer is 0.22% to 14%. In some embodiments of this application, the active material layer includes a polymer compound, where based on total mass of the active material layer, a mass percentage of the polymer compound in the active material layer is 0.8% to 3.5%.

Some embodiments of this application propose a preparation method of an electrode, which can be used to manufacture any electrode in this application and includes: applying an active material layer slurry on at least one surface of the current collector and performing drying and cold pressing to obtain an initial electrode; and treating the initial electrode to obtain the electrode; where the treating the initial electrode includes: plasma treating the initial electrode in a vacuum environment, with plasma power of 0.5 kW to 5 kW, a gas source including at least one of nitrogen, argon or tetrafluoromethane, a gas flow rate of 3000 sccm to 5000 sccm, a temperature of 20°C to 60°C, and a treatment time of 1 min to 60 min; or heat treating the initial electrode in a vacuum or inert gas environment, with a heat treatment temperature of 200°C to 400°C and a heat treatment time of not less than 5 min; or laser bombarding the initial electrode in a vacuum or inert gas environment, with a laser intensity of 25 W to 30 W and a treatment time of 1s to 600s.

In some embodiments of this application, the initial electrode is plasma treated in a vacuum environment, with a plasma power of 1 kW to 3 kW and a treatment time of 15 min to 30 min. In some embodiments of this application, the initial electrode is plasma treated in a vacuum environment, with a plasma power of 3 kW to 5 kW and a treatment time of 1 min to 15 min. In some embodiments of this application, the initial electrode is heat treated in a vacuum or inert gas environment, with a heat treatment temperature of 200°C to 250°C and a heat treatment time of 180 min to 300 min. In some embodiments of this application, the initial electrode is heat treated in a vacuum or inert gas environment, with a heat treatment temperature of 250°C to 350°C and a heat treatment time of 5 min to 180 min.

This application further proposes an electrochemical apparatus including an electrode. The electrode is the electrode according to any embodiment of this application, or the electrode is an electrode prepared by using the preparation method of this application. This application provides an electronic apparatus including the electrochemical apparatus provided in this application.

The electrode provided in some embodiments of this application includes a current collector and an active material layer disposed on at least one surface of the current collector, where when the active material layer is subjected to thermogravimetric analysis at the temperature rise rate of 10°C/min in the inert atmosphere, a result of the thermogravimetric analysis shows that a mass change of the active material layer at 200°C to 350°C is 0% to 0.2%. This indicates that the active material layer in the electrode proposed in some embodiments of this application has good conductivity, which is beneficial for increasing the thickness of the active material layer without deteriorating the performance, thereby improving the energy density of the electrochemical apparatus.

### BRIEF DESCRIPTION OF DRAWINGS

With reference to the accompanying drawings and the Detailed Description below, the above and other features, advantages, and aspects of the embodiments of this application will become more apparent. Throughout the drawings, the same or similar reference numbers indicate same or similar elements. It should be understood that the drawings are exemplary and that the components and elements are not necessarily drawn to scale.

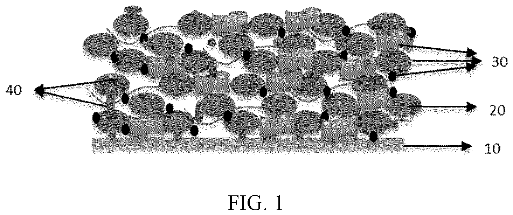

FIG. 1 is a schematic diagram of an electrode according to an embodiment of this application.

### DETAILED DESCRIPTION

The following embodiments may help persons skilled in the art to understand this application more comprehensively, but do not limit this application in any manner.

In order to improve the energy density of electrochemical apparatus, the energy density of electrochemical apparatuses is increased by increasing the thickness of active material layers in electrodes in some technologies. However, increasing the thickness of active material layers in electrodes may deteriorate the conductivity of active material layers because active material layers are too thick. In order to improve the conductivity of active material layers, in some technologies, a structure of a multilayer active material layer is adopted. However, the composite cold pressing process of multiple single-layer structures is complicated and cannot avoid the change of the original compacted density and porosity of each original layer in another cold pressing process, and adhesion parts of layers are prone to fall off due to poor adhesion, which affects the conduction of electrons and ions and deteriorates the cycling performance. In some other technologies, laser is used to perforate active material layers. However, laser perforation is inefficient, costly, and prone to energy density loss during perforation. In some other technologies, a pore-forming agent solution is applied on the surface of electrodes, but this cannot avoid the dissolution of the surface of electrodes, and the depth of pores formed by a pore-forming agent is limited, and the improvement on the current collector side is limited. The above technologies solve ion transmission from electrolytes to the surface of active materials by using different methods, but the ion transmission from the surface of active materials to the inside of active material layers has not changed, and the hindrance of ion transmission still exists. Therefore, the improvement effect is not desirable.

Some embodiments of this application provide an electrode that can improve conductivity of an active material layer of the electrode, thereby improving energy density of an electrochemical apparatus using the electrode. In some embodiments, the electrode may be an electrode plate. The electrode includes a current collector and an active material layer located on one side or both sides of the current collector. When the active material layer is subjected to thermogravimetric analysis at a temperature rise rate of 10°C/min in an inert atmosphere, a result of the thermogravimetric analysis shows that a mass change of the active material layer at 200°C to 350°C is 0% to 0.2%.

In some embodiments, if the active material layer contains a polymer compound with a low decomposition temperature (for example, a polymer compound with a decomposition temperature below 350°C), such as a high-molecular thickener, when thermogravimetric analysis is performed at 200°C to 350°C, a weight loss peak is generated due to decomposition under heat. However, the mass change of the active material layer at 200°C to 350°C in this application is 0% to 0.2%. This indicates that the active material layer in the embodiments of this application almost contains almost no polymer compounds with a low decomposition temperature. This can avoid the influence of a polymer compound with a low decomposition temperature in the active material layer on the conductivity of the active material layer, thereby improving the ion and electron conduction performance in the active material layer. In this way, when the thickness of the active material layer is increased to improve the energy density of the electrochemical apparatus, the electrochemical performance of the electrochemical apparatus is not deteriorated due to the thickness increase of the active material layer because the active material layer has good conductivity. It can be learned that in the electrode proposed in some embodiments of this application, the active mater layer having good conductivity helps to improve the performance of the electrochemical apparatus using the electrode, and helps to increase the energy density.

In some embodiments of this application, the result of the thermogravimetric analysis shows that the number of weight loss peaks of the active material layer at 200°C to 350°C is 0. This indicates that there are almost no polymer compounds with a low decomposition temperature in some embodiments of this application. In some embodiments of this application, the result of the thermogravimetric analysis shows that the number of weight loss peaks of the active material layer at 350°C to 800°C is not less than 1. This indicates that the active material layer in this application has a polymer compound with a high decomposition temperature (a polymer compound with a decomposition temperature of 350°C to 800°C). This is because the polymer compound is needed in the active material layer to make the materials in the active material layer stick together and adhere between the current collectors.

In some embodiments of this application, the result of the thermogravimetric analysis shows that amass change of the active material layer at 350°C to 800°C is 0.21% to 13%. This indicates that the percentage of the polymer compound with a high decomposition temperature being not zero helps to guarantee the overall cohesion of the active material layer and the adhesion force with the current collector, and prevents an excessive polymer compound from affecting the conductivity. Optionally, the result of the thermogravimetric analysis shows that a mass change of the active material layer at 350°C to 800°C is 0.77% to 3.4%, thereby balancing the requirements of conductivity and adhesion force.

In some embodiments of this application, the electrode is a negative electrode, such as a negative electrode of an electrochemical apparatus. In some embodiments, the electrode is a negative electrode, the active material layer is an active material layer of the negative electrode, and the current collector is a current collector of the negative electrode. The current collector may be copper foil, aluminum foil, steel foil, or the like, which is not limited herein. In some embodiments, compacted density ρ of the active material layer is ≥ 0.6 g/cm³. A higher compacted density indicates that the mass of the active material layer carried in the unit volume of the electrode is larger, and a larger mass of the active material layer helps to improve the energy that can be stored per unit volume, thereby improving the energy density. In some embodiments, compacted density ρ of the active material layer satisfies: 1.85 g/cm³ ≥ ρ ≥ 0.65 g/cm³. This is beneficial for improving the energy density. In some embodiments, limiting the compacted density of the active material layer to not less than 0.65 g/cm³ can further ensure the energy density, and limiting the compacted density of the negative electrode active material layer to not greater than 1.85 g/cm³ can prevent particles in the active material layer from breaking under excessively large compacted density, while such breaking aggravates consumption of the electrolyte and deteriorates the cycling performance. Optionally, 1.83 g/cm³ ≥ ρ ≥ 1.0 g/cm³.

In some embodiments, the thickness h of the active material layer on one side of the current collector is ≥10 µm. In some embodiments, a thicker active material layer is beneficial for increasing the proportion of the active material layer, thereby improving the energy density. In some embodiments of this application, thickness h of the active material layer on one side of the current collector satisfies: 1500 µm ≥ h ≥ 15 µm. Limiting the thickness of the active material layer to not less than 15 µm can guarantee the thickness of the negative electrode active material layer, thereby improving the energy density. Limiting the thickness of the negative electrode active material layer to not greater than 1500 µm can prevent that the negative electrode active material layer is too thick, which may cause a problem that the negative electrode active material layer falls from the current collector. Optionally, 150 µm ≥ h ≥ 30 µm.

In some embodiments, adhesion force F between the active material layer and the current collector satisfies: 300 N/m ≥ F ≥ 0.5 N/m. The adhesion force between the active material layer and the current collector being too small may cause the active material layer fall from the current collector, further deteriorating the conductivity. The adhesion force between the active material layer and the current collector being too large increases the amount of binder, which is also not beneficial to the conductivity. Optionally, adhesion force F between the active material layer and the current collector satisfies: 150 N/m ≥ F ≥ 1 N/m. Optionally, 20 N/m ≥ F ≥ 1 N/m.

In some embodiments, resistivity of the active material layer is 0.01 Ω*cm to 50 Ω*cm. This indicates that the negative electrode active material layer of this application has good conductivity, which is beneficial for the electric performance. In some embodiments, the negative electrode active material layer includes a negative electrode material, and the negative electrode material includes at least one of lithium titanate, silicon monoxide, graphite, silicon or hard carbon. For example, the negative electrode material may be a combination of at least two of the above materials.

In some embodiments of this application, the active material layer includes a conductive agent, where the conductive agent includes at least one of carbon nanotubes, carbon fibers, acetylene black, graphene, Ketjen black, or conductive carbon black. The conductive agent can increase the conductivity of the active material layer. Carbon nanotubes may be single-walled carbon nanotubes or multi-walled carbon nanotubes. Single-walled carbon nanotubes can increase long-range electron conduction and reduce the area of the binder covering the active material, reducing the ion transmission resistance, thereby improving the kinetic performance. In some embodiments, the active material layer includes a conductive agent, where based on total mass of the active material layer, a mass percentage of the conductive agent in the active material layer is 0% to 2%. In some embodiments, a mass percentage of the conductive agent in the active material layer in some embodiments of this application may be 0%. This is because in some embodiments of this application, the active material layer does not have a polymer compound with a low decomposition temperature. A polymer compound with a low decomposition temperature may come from the binder and/or thickener in the electrode and already has good conductivity, so no conductive agent needs to be added. The mass percentage of the conductive agent is limited to not greater than 2% so as to avoid a decrease in the capacity of the active material layer caused by an excessively high percentage of the conductive agent.

In some embodiments of this application, the active material layer includes a polymer compound, where the polymer compound includes at least one of polyethylene oxide, polypropylene oxide, polyvinylidene difluoride, polytetrafluoroethylene, polyacrylonitrile, polyimide, polysiloxane, polyacrylic acid, polypropylene derivative, sodium carboxymethyl cellulose, lithium carboxymethyl cellulose, polymethylpyrrolidone, polyethylene pyrrolidone, styrene acrylate, or styrene-butadiene rubber. The polymer compound may be at least one of binder or thickener.

In some embodiments of this application, the active material layer includes a polymer compound, where based on total mass of the active material layer, a mass percentage of the polymer compound in the active material layer is 0.22% to 14%. The mass percentage of the polymer compound being too low may cause insufficient adhesion force between the active material layer and the current collector. The mass percentage of the polymer compound being too high may affect the conductivity of the active material layer. Optionally, the mass percentage of the polymer compound in the active material layer is 0.8% to 3.5%.

In some embodiments of this application, the polymer compound (which may be a binder) is distributed on the surface of the active material (for example, the negative electrode material) of the active material layer in a dotted or planar manner, and gathers on the surface of the active material or between particles of the active material. A larger exposed part of the active material means smaller hindrance to the electron and ion transmission, helping to guarantee the conductivity.

In some embodiments, referring to FIG. 1, the electrode includes a current collector 10 and an active material layer. The active material layer includes an active material 20, a conductive agent 30, and a binder 40. The conductive agent may include a zero-dimensional conductive agent, a one-dimensional conductive agent and a two-dimensional conductive agent. The binder 40 may include a first binder and a second binder. With conductive agents of different dimensions used, gaps between the active materials can be fully filled, thereby improving the overall conductivity.

Some embodiments of this application propose a preparation method of an electrode, which can be used to manufacture any electrode in this application and includes: applying an active material layer slurry on at least one surface of the current collector and performing drying and cold pressing to obtain an initial electrode; and treating the initial electrode to obtain the electrode; where the treating the initial electrode includes: plasma treating the initial electrode in a vacuum environment, with a plasma power of 0.5 kW to 5 kW, a gas source including at least one of nitrogen, argon or tetrafluoromethane, a gas flow rate of 3000 sccm to 5000 sccm, a temperature of 20°C to 60°C, and a treatment time of 1 min to 60 min; or heat treating the initial electrode in a vacuum or inert gas environment, with a heat treatment temperature of 200°C to 400°C and a heat treatment time of not less than 5 min; or laser bombarding the initial electrode in a vacuum or inert gas environment, with a laser intensity of 25 W to 30 W and a treatment time of 1s to 600s.

According to the preparation method of an electrode proposed in some embodiments of this application, treating the initial electrode can remove polymer compounds with a low decomposition temperature in the active material layer, thereby improving the conductivity of the electrochemical apparatus, and further improving the energy density. In some embodiments of this application, the active material layer of the electrode includes an active material, a conductive agent and a binder, and no polymer compound with a low decomposition temperature (for example, a high-molecular binder and/or thickener with a low decomposition temperature), avoiding the hindrance of the polymer compound to electron and ion transmission.

In some embodiments of this application, the initial electrode is plasma treated in a vacuum environment, with a plasma power of 1 kW to 3 kW and a treatment time of 15 min to 30 min. Increasing the plasma power can reduce the treatment time. In some other embodiments of this application, the initial electrode is plasma treated in a vacuum environment, with a plasma power of 3 kW to 5 kW and a treatment time of 1 min to 15 min.

In some embodiments of this application, the initial electrode is heat treated in a vacuum or inert gas environment, with a heat treatment temperature of 200°C to 250°C and a heat treatment time of 180 min to 300 min. In some other embodiments of this application, the initial electrode is heat treated in a vacuum or inert gas environment, with a heat treatment temperature of 250°C to 350°C and a heat treatment time of 5 min to 180 min. The time for heat treatment of the initial electrode is related to the heat treatment temperature. Increasing the heat treatment temperature can reduce the heat treatment time, and extending the heat treatment time can reduce the heat treatment temperature.

An electrochemical apparatus in some embodiments of this application includes an electrode. The electrode is the electrode according to any embodiments of this application, or the electrode is an electrode prepared by using the preparation method of this application. In some embodiments, the electrochemical apparatus includes a positive electrode, a negative electrode, and a separator disposed between the positive electrode and the negative electrode. In some embodiments, the negative electrode may be any one of the foregoing electrodes. In some embodiments, a current collector of the positive electrode may be Al foil, or certainly may be another current collector commonly used in the art.

In some embodiments, the separator includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits and can improve stability of a battery through a shutdown effect. In some embodiments, a thickness of the separator ranges from approximately 5 µm to 50 µm.

In some embodiments, a surface of the separator may further include a porous layer. The porous layer is disposed on at least one surface of the separator. The porous layer includes inorganic particles and the binder. The inorganic particles are selected from at least one of aluminum oxide (Al₂O₃), silicon oxide (SiO₂), magnesium oxide (MgO), titanium oxide (TiO₂), hafnium dioxide (HfC₂), tin oxide (SnO₂), cerium dioxide (CeO₂), nickel oxide (NiO), zinc oxide (ZnO), calcium oxide (CaO), zirconia oxide (ZrO₂), yttrium oxide (Y₂O₃), silicon carbide (SiC), boehmite, aluminum hydroxide, magnesium hydroxide, calcium hydroxide, or barium sulfate. In some embodiments, a pore diameter of the separator ranges from approximately 0.01 µm to 1 µm. The binder in the porous layer is selected from at least one of polyvinylidene fluoride, vinylidene fluoride-hexafluoropropylene copolymer, polyamide, polyacrylonitrile, polyacrylic ester, polyacrylic acid, a polyacrylic salt, sodium carboxylmethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical apparatus may be a wound or stacked electrochemical apparatus. In some embodiments, the positive electrode and/or the negative electrode of the electrochemical apparatus may be a multilayer structure formed through winding or lamination, or may be a single-layer structure formed by stacking a single positive electrode, a separator, and a single negative electrode.

In some embodiments, the electrochemical apparatus includes a lithium-ion battery but this application is not limited thereto. In some embodiments, the electrochemical apparatus may further include an electrolyte. The electrolyte may be one or more of gel electrolyte, solid electrolyte, and liquid electrolyte, and the liquid electrolyte includes a lithium salt and a non-aqueous solvent. The lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoro(oxalate)borate. For example, LiPF₆ is selected as the lithium salt because it has a high ionic conductivity and can improve cycling performance.

The non-aqueous solvent may be a carbonate compound, a carboxylate compound, an ether compound, another organic solvent, or a combination thereof. The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments of this application, a lithium-ion battery is used as an example. A positive electrode, a separator, and a negative electrode are wound or stacked in sequence to form an electrode assembly, and the electrode assembly is then packaged in an aluminum-plastic film, followed by injection of an electrolyte, formation, and packaging, so that the lithium-ion battery is prepared. Then, a performance test is performed on the prepared lithium-ion battery.

Those skilled in the art will understand that the method for preparing the electrochemical apparatus (for example, the lithium-ion battery) described above is only an embodiment. Without departing from the content disclosed in this application, other methods commonly used in the art may be used.

This application provides an electronic apparatus including an electrochemical apparatus. The electrochemical apparatus is the electrochemical apparatus according to any one of the foregoing embodiments. The electronic apparatus in the embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a drone, a lighting appliance, a toy, a game console, a clock, an electric tool, a flash lamp, a camera, a large household battery, and the like.

Some specific examples and comparative examples are listed below to better illustrate this application. Lithium-ion batteries are used as examples.

### Example 1

Preparation of positive electrode plate: A positive electrode material lithium cobalt oxide, polyvinylidene fluoride (PVDF), and conductive agent carbon nanotubes (CNT) were mixed at a mass ratio of 97.5:1:4.5, and N-methyl pyrrolidone (NMP) was used as a solvent to prepare a slurry. The foregoing substances were stirred to uniformity to form a positive electrode active material layer slurry. The slurry was uniformly applied on a positive electrode current collector aluminum foil, followed by drying to obtain a positive electrode plate.

Preparation of negative electrode plate A negative electrode material graphite, a binder styrene acrylate, a binder styrene-butadiene rubber, a conductive agent carbon nanotubes, and a thickener sodium carboxymethyl cellulose were mixed at a mass ratio of 98.56:0.62:0.62:0.2:1, and deionized water was used as a solvent to form a negative electrode active material layer slurry. A copper foil was used as a negative electrode current collector, and the negative electrode active material layer slurry was applied on a negative electrode current collector, and dried at 90°C. The negative electrode plate after drying was subjected to heat treatment, where the heat treatment temperature was 360°C, the heat treatment time may be 10 min, and a negative electrode plate was obtained after heat treatment.

Preparation of separator: A separator is 8 µm thick polyethylene (PE).

Preparation of an electrolyte: In an environment with a water content less than 10 ppm, lithium hexafluorophosphate and a non-aqueous organic solvent (a weight ratio of ethylene carbonate (EC):diethyl carbonate (DEC):propylene carbonate (PC):propylpropionate (PP):vinylene carbonate (VC) was equal to 20:30:20:28:2) were mixed at a weight ratio of 8:92 to prepare an electrolyte.

Preparation of lithium-ion battery: The positive electrode plate, the separator, and the negative electrode plate were stacked in sequence, so that the separator was disposed between the positive electrode plate and the negative electrode plate for separation, and winding was performed to obtain an electrode assembly. The electrode assembly was put in an outer package aluminum-plastic film, and was dehydrated at 80°C. Then, the foregoing electrolyte was injected and the package was sealed, followed by processes such as formation, degassing, and trimming to obtain a lithium-ion battery.

The relevant parameters of Example 1 were as follows: The negative electrode active material layer included graphite, styrene acrylate, styrene-butadiene rubber, and CNT. Mass percentages of the graphite, styrene acrylate, styrene-butadiene rubber, and CNT were 98.56%, 0.62%, 0.62%, and 0.2%, respectively. The binders of the negative electrode active material were styrene acrylate and styrene-butadiene rubber at a mass ratio of 1:1. The mass percentage of the polymer compound in the negative electrode active material layer was 1.24%, the compacted density of the active material layer of the negative electrode was 1.75 g/cm³, the thickness of the active material layer on one side of the current collector of the negative electrode was 75 µm, the adhesion force between the active material layer and the current collector of the negative electrode was 11 N/m, and the resistivity of the active material layer of the negative electrode was 0.1 Ω*cm. The negative electrode material was graphite, and the conductive agent was carbon nanotubes (CNT).The mass percentage of the conductive agent in the active material layer of the negative electrode was 0.2%, the number of weight loss peaks of the active material layer of the negative electrode at 200°C to 350°C was 0, the mass change at 200°C to 350°C was 0.10%, the number of weight loss peaks at 350°C to 800°C was 2, and the mass change at 350°C to 800°C was 1.25%. The positive electrode active material layer included lithium cobalt oxide, PVDF, and CNT, where the mass percentages of lithium cobalt oxide, PVDF, and CNT were 97.5%, 1%, and 1.5%, respectively. The positive electrode had a single side thickness of 63 microns, and a compacted density of 4.12 g/cm³.

In other examples, the parameters in the steps of Example 1 were changed, and the specific changed parameters were shown in the following table. In all examples, the same amount of sodium carboxymethyl cellulose was added to the negative electrode active material layer slurry, and heat treatment was performed for removal.

### Comparative Example 1

Preparation of negative electrode plate A negative electrode material graphite, a binder styrene acrylate, and a thickener sodium carboxymethyl cellulose were mixed at a mass ratio of 97:2:1.0, and deionized water was used as a solvent to form a negative electrode active material layer slurry. A copper foil was used as a negative electrode current collector, and the negative electrode active material layer slurry was applied on a negative electrode current collector, and dried at 90°C to obtain a negative electrode plate.

The remaining preparation steps of Comparative Example 1 were the same as those of Example 1. The difference between the parameters of Comparative Example 1 and Example 1 is shown in the table below.

### Comparative Example 2

Preparation of negative electrode plate: A negative electrode material graphite, a conductive agent carbon nanotubes, a binder styrene-butadiene rubber, and a thickener sodium carboxymethyl cellulose were mixed at a mass ratio of 97.2:0.3:1.5:1.0, and deionized water was used as a solvent to form a negative electrode active material layer slurry. A copper foil was used as a negative electrode current collector, and the negative electrode active material layer slurry was applied on a negative electrode current collector, and dried at 90°C to obtain a negative electrode plate.

The remaining preparation steps of Comparative Example 2 were the same as those of Example 1. The difference between the parameters of Comparative Example 2 and Example 1 is shown in the table below.

### Comparative Example 3

Preparation of negative electrode plate: A negative electrode material graphite, a conductive agent carbon nanotubes, a binder polyacrylate, and a thickener sodium carboxymethyl cellulose were mixed at a mass ratio of 94.9:0.1:4:1.0, and deionized water was used as a solvent to form a negative electrode active material layer slurry. A copper foil was used as a negative electrode current collector, and the negative electrode active material layer slurry was applied on a negative electrode current collector, and dried at 90°C to obtain a negative electrode plate.

The remaining preparation steps of Comparative Example 3 were the same as those of Example 1. The difference between the parameters of Comparative Example 3 and Example 1 is shown in the table below.

The following describes the test methods in this application.

### 1. Thermogravimetric test

The battery was discharged to 3.0 V, and the battery was disassembled to obtain the negative electrode plate. The electrode plate was immersed in DMC (dimethyl carbonate) for 12 hours to 24 hours, and then the electrode plate was immersed with new DMC for 12 hours to 24 hours, and dried at 80°C to 100°C. Active material layer powder was scrapped from the corresponding position on the electrode plate surface for testing. The thermogravimetric analysis method was used to determine the active material layer of the negative electrode of the prepared lithium-ion battery to perform thermogravimetric analysis, so as to test the mass change and the number of weight loss peaks during the thermogravimetric analysis. The test range was 200°C to 350°C and 350°C to 800°C, the temperature rise rate was 10°C/min, and the test atmosphere was an inert atmosphere.

### 2. Resistivity test

The resistivity of the active material layer was tested by a resistance tester. The electrode plate was directly measured by controllable pressure probes on the upper and lower planes. An alternating current was loaded on the positive electrode plate or negative electrode plate under test, and a certain pressure (0.35T) was applied to the active material layer under test. The overall resistance in the thickness direction of the electrode plate was obtained, and the area (A) and thickness (1) of the electrode plate under test were collected. According to the resistivity calculation formula (ρ=R*A/1), the resistivity of the electrode plate under test was derived.

### 3. Alternating current resistance test

A small alternating current of 1 Khz was applied to the positive and negative electrodes of the battery, and the value of the alternating current resistance of the battery was obtained by measuring the voltage response.

### 4. Direct current resistance DCR test at 25°C

At 25°C, the lithium-ion battery was charged at a constant current of 0.5C to 4.45 V, then charged at a constant voltage to 0.05C, left standing for 30 min; discharged at 0.1C for 3 h until the state of charge of the battery was 70% SOC (the corresponding discharge end voltage value U1 was recorded), and discharged at 1C for 1s (the corresponding discharge end voltage value U2 was recorded). "1C" refers to a current at which a battery is fully discharged in one hour. The DCR of the battery at 70% SOC was calculated according to the following formula: DCR = (U1 - U2)/(1C - 0.1C).

### 5. Rate performance test

In an environment of 25°C, the battery was discharged at a constant current to 3 V to perform the first charge and discharge. The battery was charged at a constant current of 0.7C until the upper limit voltage was 4.48 V, then charged at a constant voltage to 0.05C, and then was discharged at a constant current of 0.2C until the final voltage was 3 V. At that time, the discharge capacity at 0.2C was recorded, and then the battery was charged at a charging current of 0.7C until the upper limit voltage was 4.48 V, then charged at a constant voltage to 0.05C, discharged at a constant rate of 3C until the final voltage was 3 V. At that time, the discharge capacity at 3C was recorded.

Discharge capacity retention rate at 3C = (discharge capacity at 3C/discharge capacity at 0.2C) × 100%.

### 6. Cycling performance test

The battery was charged at a rate of 0.5C to 4.2 V, charged at a constant voltage of 4.21 V until the current dropped to 0.025C, left standing for 5 minutes, and then discharged at a rate of 0.5C to 3.0 V. This was one cycle. The discharge capacity was recorded as the capacity of the lithium-ion battery. The foregoing cycle was repeated 1000 times, and the discharge capacity was recorded to serve as the remaining capacity of the lithium-ion battery. Cycling capacity retention rate after 1000 cycles = remaining capacity/initial capacity × 100%

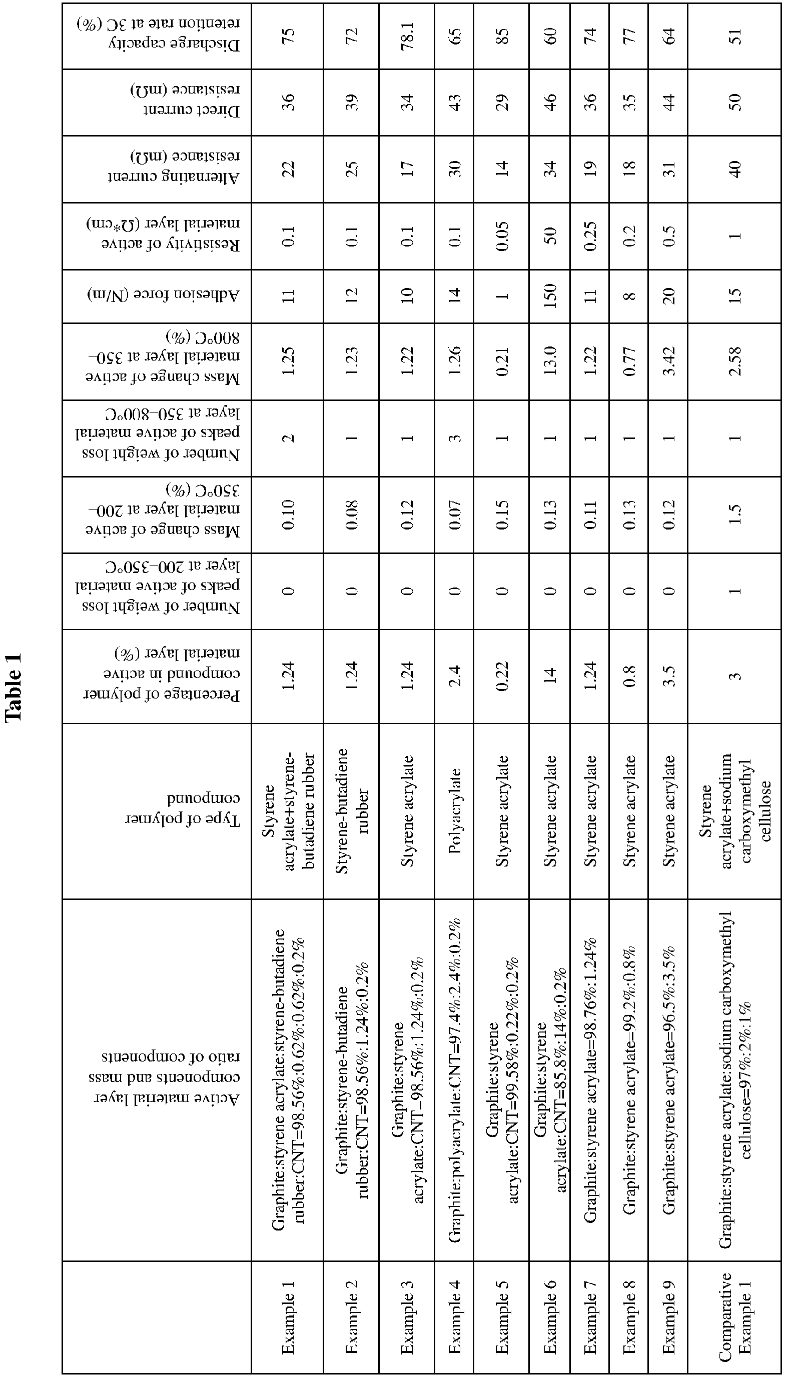

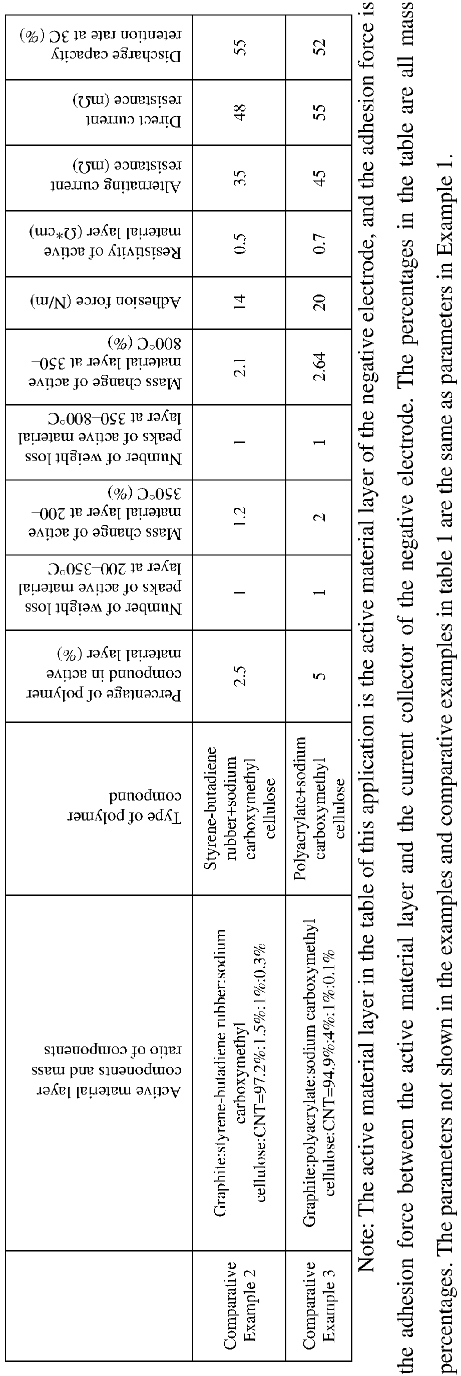

Refer to table 1. Table 1 shows the preparation parameters and performance test results of Examples 1 to 9 and Comparative Examples 1 to 3. The preparation parameters not shown in table 1 are the same. It can be learned from table 1 that the mass change of the negative electrode active material layer in Examples 1 to 9 at 200°C to 350°C is 0% to 0.2%, the number of weight loss peaks of the active material layer of the negative electrode at 200°C to 350°C is 0, and the number of weight loss peaks at 350°C to 800°C is not 0. The mass change of the active material layer of the negative electrode in Comparative Examples 1 to 9 at 200°C to 350°C is greater than 0.2%, the number of weight loss peaks of the active layer of the negative electrode at 200°C to 350°C is not 0, and the number of weight loss peaks at 350°C to 800°C is not 0 either. It can be learned from table 1 that the alternating current resistance and direct current resistance of the lithium-ion battery in Examples 1 to 9 are significantly lower than those in Comparative Examples 1 to 3, and the capacity retention rate in Examples 1 to 9 after 3C rate discharge is significantly higher than those of Comparative Examples 1 to 3. It can be learned from the above data that when the mass change of the negative electrode active material layer at 200°C to 350°C is 0% to 0.2% after the active material layer is subjected to thermogravimetric analysis at 200°C to 350°C, the conductivity of the active material layer can be improved, thereby reducing the resistance of the electrochemical apparatus, which is beneficial to improving the rate performance. This is because the active material layers of the negative electrodes in Examples 1 to 9 have been heat treated to remove polymer compounds with a low decomposition temperature, thereby improving the conductivity. Therefore, the lithium-ion batteries all have good conductivity and rate performance.

As shown in Comparative Examples 1 to 3, with the increase in the mass change in the thermogravimetric analysis process at 200°C to 350°C, the alternating current resistance and direct current resistance of the lithium-ion battery increase. This may be because the mass change in the thermogravimetric process at 200°C to 350°C reflects the percentage of the polymer compound with a low decomposition temperature, and the increase in the percentage of the polymer compound with a low decomposition temperature is not conducive to the conductivity of the lithium-ion battery.

As shown in Examples 1 to 4, the number of weight loss peaks of the negative electrode active material layer at 350°C to 800°C is related to the type of binder, one type of binder corresponding to one weight loss peak. When the binder is styrene acrylate, the alternating current resistance and direct current resistance are the smallest, and the discharge capacity retention rate at 3C is the highest.

As shown in Examples 5 to 9, with the increase of the mass change in the thermogravimetric analysis process of the negative electrode active material layer at 350°C to 800°C, the conductivity of the lithium-ion battery begins to decrease, and the discharge capacity retention rate at 3C decreases slightly. This may be because the mass change in the thermogravimetric process at 350°C to 800°C reflects the percentage of the polymer binder with a high decomposition temperature, and the increase in the percentage of the binder is not conducive to the conductivity and discharge performance of the lithium-ion battery. A higher mass percentage of the binder means a greater adhesion force, but higher alternating current resistance and direct current resistance, and the discharge capacity retention rate at 3C is affected. However, the adhesion force being too small may cause the negative electrode active material layer to separate from the current collector.

**Table 2**

| Example | Active material layer components and mass ratio of components | Type of polymer compound | Number of weight loss peaks of active material layer at 350-800°C | Mass change of active material layer at 350-800°C (%) | Compacted density of active material layer (g/cm³) | Thickness of active material layer on one side (µm) | Adhesion force (N/m) | Resistivit y of active material layer (Ω*cm) | Alternating current resistance (mΩ) | Direct current resistance (mΩ) | Discharge capacity retention rate at 3C (%) | Discharge capacity retention rate after 1000 cycles (%) |
|---|---|---|---|---|---|---|---|---|---|---|---|---|
| 10 | Graphite: styrene acrylate=98.76%:1.24% | Styrene acrylate | 1 | 1.23 | 0.65 | 75 | 5 | 0.35 | 25 | 31 | 85 | 90 |
| 11 | Graphite: styrene acrylate=98.76%:1.24% | Styrene acrylate | 1 | 1.21 | 1.00 | 75 | 8 | 0.3 | 22 | 33 | 82 | 85 |
| 7 | Graphite: styrene acrylate=98.76%:1.24% | Styrene acrylate | 1 | 1.22 | 1.75 | 75 | 11 | 0.25 | 19 | 36 | 74 | 80 |
| 12 | Graphite: styrene acrylate=98.76%:1.24% | Styrene acrylate | 1 | 1.20 | 1.83 | 75 | 14 | 0.09 | 15.5 | 34 | 80 | 83 |
| 13 | Graphite: styrene acrylate=98.76%:1.24% | Styrene acrylate | 1 | 1.23 | 1.85 | 75 | 15 | 0.08 | 15 | 33 | 82 | 87 |
| 14 | Graphite: styrene acrylate=98.76%:1.24% | Styrene acrylate | 1 | 1.22 | 1.75 | 15 | 100 | 0.25 | 13 | 29 | 90 | 93 |
| 15 | Graphite: styrene acrylate=98.76%:1.24% | Styrene acrylate | 1 | 1.24 | 1.75 | 30 | 35 | 0.25 | 17 | 32 | 83 | 87 |
| 7 | Graphite: styrene acrylate=98.76%:1.24% | Styrene acrylate | 1 | 1.22 | 1.75 | 75 | 11 | 0.25 | 19 | 36 | 74 | 80 |
| 16 | Graphite: styrene acrylate=98.76%:1.24% | Styrene acrylate | 1 | 1.21 | 1.75 | 150 | 9 | 0.25 | 24 | 38 | 72 | 78 |
| 17 | Graphite: styrene acrylate=98.76%:1.24% | Styrene acrylate | 1 | 1.23 | 1.75 | 1500 | 3 | 0.25 | 32 | 45 | 60 | 65 |

Examples 7, and 10 to 17 are the same as in Example 1 in all parameters except for the parameters shown in table 2.

As shown in Examples 10, 11, 7, 12, and 13, with the increase of the compacted density of the active material layer of the negative electrode, the adhesion force increases, the resistivity decreases, the alternating current resistance gradually decreases, the direct current resistance first increases and then decreases, the discharge capacity retention rate at 3C first decreases and then increases, and the cycling capacity retention rate after 1000 cycles first decreases and then increases. This may be because the increase in the compacted density reduces the distance for ions and electrons to be transmitted between particles, thereby improving the conductivity and reducing the resistance. However, the compacted density being too large may lead to insufficient electrolyte infiltration, which may be detrimental to the performance of the lithium-ion battery.

As shown in Examples 14, 15, 7, 16 and 17, as the thickness of the active material layer on one side of the negative electrode current collector increases, the adhesion force of the lithium-ion battery decreases, the alternating current resistance and direct current resistance increase, and the discharge capacity retention rate at 3C and the capacity retention rate after 1000 cycles decrease. This may be because the increase in the thickness of the negative electrode active material layer lengthens the path for ion and electron transmission, which is not conducive to conductivity and deteriorates the kinetic performance. However, if the negative electrode active material layer has a too small thickness, the capacity that the negative electrode can store will be reduced, which is not conducive to the energy density. Therefore, the balance between the performance and capacity density of the lithium-ion battery must be considered.

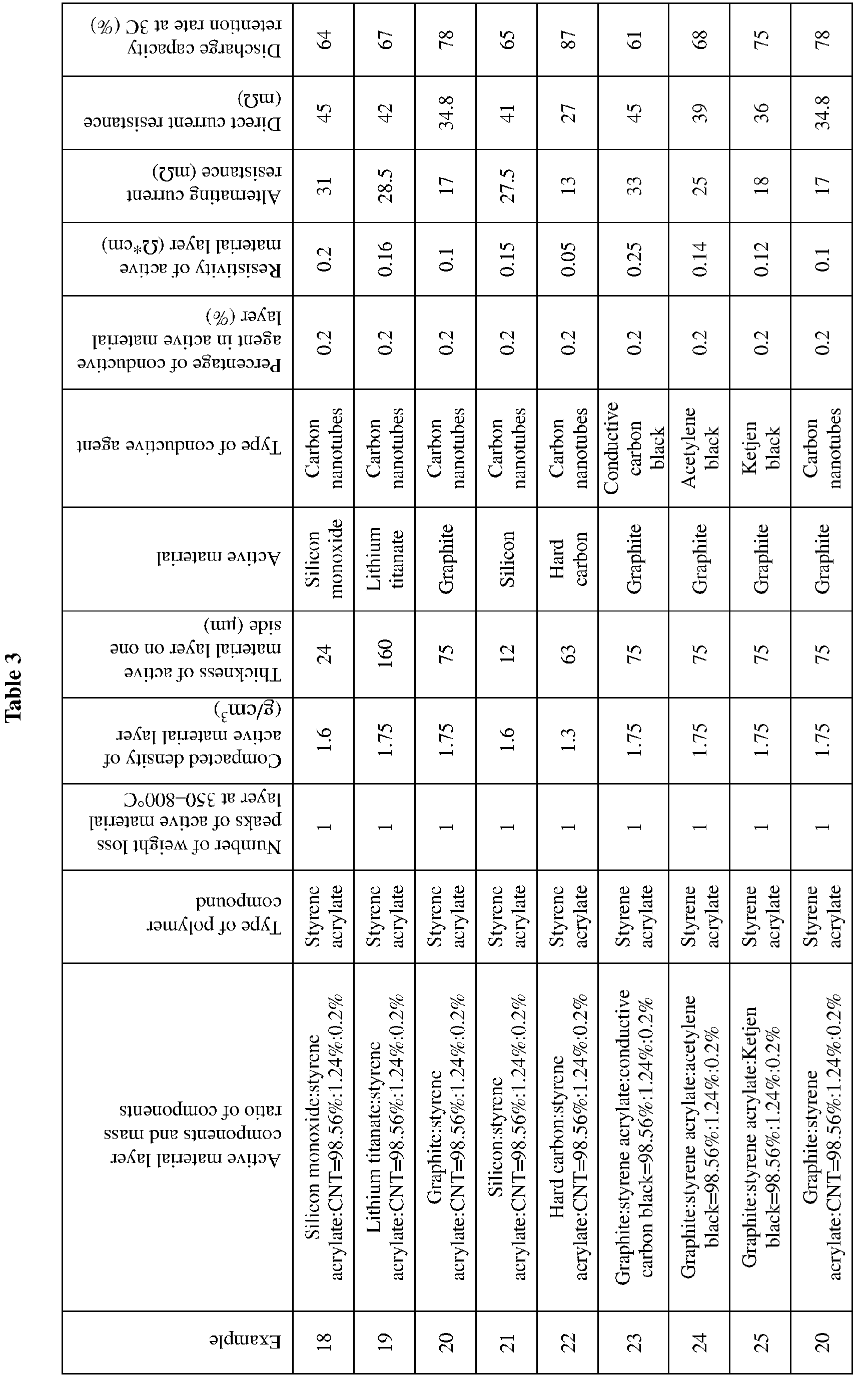

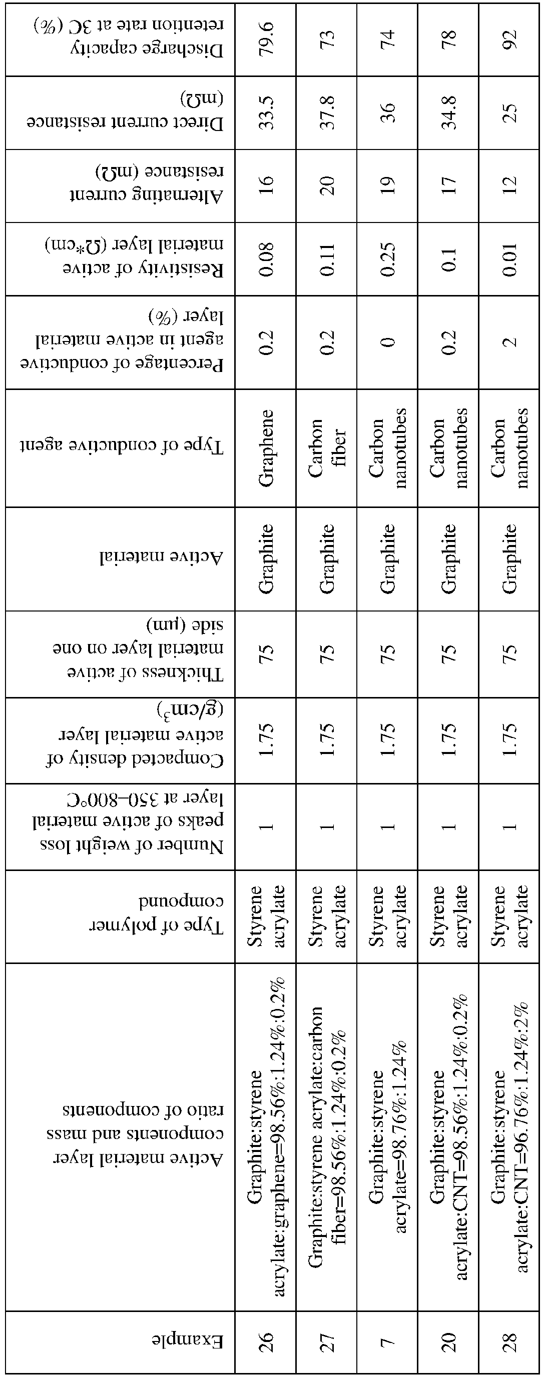

Examples 18 to 28 are the same as in Example 1 in all parameters except for the parameters shown in table 3.

As shown in Examples 18 to 22, when the negative electrode material is silicon monoxide, lithium titanate, graphite, silicon or hard carbon, the lithium-ion batteries all have relatively balanced performance. The performance is the best when the negative electrode material is hard carbon, but the compacted density is relatively low. The comprehensive performance is the best when the negative electrode material is graphite.

As shown in Examples 23 to 27, when the conductive agent is conductive carbon black, acetylene black, Ketjen black, carbon nanotubes, graphene, or carbon fibers, the lithium-ion batteries all have a relatively small resistivity, alternating current resistance, and direct current resistance, and a relatively high discharge capacity retention rate at 3C. It can be learned from this that when the conductive agent includes the above materials, the performance requirements of the lithium-ion battery can be met.

As shown in Examples 7, 20 and 28, the resistivity of the active material layer of the negative electrode is adjusted by adjusting the percentage of carbon nanotubes in the active material layer. With the increase of the conductive agent in the active material layer of the negative electrode, the resistivity decreases, the alternating current resistance and direct current resistance of the lithium-ion battery decreases, and the discharge capacity retention rate at 3C increases. This is because the reduction of the resistivity of the active material layer improves the conductivity of the lithium-ion battery, thereby improving the performance of the lithium-ion battery. However, an excessive conductive agent may lead to a decrease in energy density.

The foregoing descriptions are only preferred examples of this application and explanations of the applied technical principles. Persons skilled in the art should understand that the related scope disclosed in this application is not limited to the technical solutions formed by a specific combination of the foregoing technical characteristics, and should also cover other technical solutions formed by any combination of the foregoing technical characteristics or their equivalent characteristics, For example, a technical solution formed by replacement between the foregoing characteristics and technical characteristics having similar functions disclosed in this application.

## Claims

1. An electrode, comprising: a current collector and an active material layer disposed on at least one surface of the current collector; wherein a mass change of the active material layer at 200°C to 350°C is 0% to 0.2% according to results of a thermogravimetric analysis performed on the active material layer in an inert atmosphere at a temperature rise rate of 10°C/min.

2. The electrode according to claim 1, satisfying at least one of the following:
(a) a number of weight loss peaks of the active material layer at 200°C to 350°C is 0 according to the results of the thermogravimetric analysis;
(b) a number of weight loss peaks of the active material layer at 350°C to 800°C is not less than 1 according to the results of the thermogravimetric analysis; or
(c) a mass change of the active material layer at 350°C to 800°C is 0.21% to 13% according to the results of the thermogravimetric analysis.

3. The electrode according to claim 1, wherein a mass change of the active material layer at 350°C to 800°C is 0.77% to 3.4% according to the results of the thermogravimetric analysis.

4. The electrode according to claim 1, wherein
the electrode is a negative electrode.

5. The electrode according to claim 4, wherein the electrode satisfies at least one of the following conditions:
(a) a compacted density ρ of the active material layer is ≥0.6 g/cm³;
(b) a thickness h of the active material layer on one side of the current collector is ≥10 µm;
(c) 300 N/m ≥ F ≥ 0.5 N/m, F is an adhesion force between the active material layer and the current collector;
(d) a resistivity of the active material layer is 0.01 Ω*cm to 50 Q*cm; or
(e) the active material layer comprises a negative electrode material, wherein the negative electrode material comprises at least one of lithium titanate, silicon monoxide, graphite, silicon, or hard carbon.

6. The electrode according to claim 4, wherein the electrode satisfies at least one of the following conditions:
(f) 1.85 g/cm³ ≥ ρ ≥ 0.65 g/cm³, ρ is a compacted density of the active material layer;
(g) 1500 µm ≥ h ≥ 15 µm, h is a thickness of the active material layer on one side of the current collector; or
(h) 150 N/m ≥ F ≥ 1 N/m, F is an adhesion force between the active material layer and the current collector.

7. The electrode according to claim 4, wherein the electrode satisfies at least one of the following conditions:
(i) 1.83 g/cm³ ≥ ρ ≥ 1.0 g/cm³, ρ is a compacted density of the active material layer;
(j) 150 µm ≥ h ≥ 30 µm, h is a thickness of the active material layer on one side of the current collector; or
(k) 20 N/m ≥ F ≥ 1 N/m, F is an adhesion force between the active material layer and the current collector.

8. The electrode according to claim 1, wherein
the active material layer comprises a conductive agent, wherein the conductive agent comprises at least one of carbon nanotubes, carbon fibers, acetylene black, graphene, Ketjen black, or conductive carbon black.

9. The electrode according to claim 1, wherein
the active material layer comprises a conductive agent, wherein based on a total mass of the active material layer, a mass percentage of the conductive agent in the active material layer is 0% to 2%.

10. The electrode according to claim 1, wherein the active material layer comprises a polymer compound; wherein the polymer compound comprises at least one of polyethylene oxide, polypropylene oxide, polyvinylidene difluoride, polytetrafluoroethylene, polyacrylonitrile, polyimide, polysiloxane, polyacrylic acid, polypropylene derivative, sodium carboxymethyl cellulose, lithium carboxymethyl cellulose, polymethylpyrrolidone, polyethylene pyrrolidone, styrene acrylate, or styrene-butadiene rubber.

11. The electrode according to claim 1, wherein
the active material layer comprises a polymer compound; wherein based on a total mass of the active material layer, a mass percentage of the polymer compound in the active material layer is 0.22% to 14%.

12. The electrode according to claim 1, wherein
the active material layer comprises a polymer compound; wherein based on a total mass of the active material layer, a mass percentage of the polymer compound in the active material layer is 0.8% to 3.5%.

13. A method of preparing the electrode according to any one of claims 1 to 12, the method comprising:
applying an active material layer slurry on at least one surface of the current collector and performing drying and cold pressing to obtain an initial electrode; and
treating the initial electrode to obtain the electrode;
wherein the treating the initial electrode comprises:
plasma treating the initial electrode in a vacuum environment, with a plasma power of 0.5 kW to 5 kW, a gas source comprising at least one of nitrogen, argon or tetrafluoromethane, a gas flow rate of 3000 sccm to 5000 sccm, a temperature of 20°C to 60°C, and a treatment time of 1 min to 60 min;
heat treating the initial electrode in a vacuum or inert gas environment, with a heat treatment temperature of 200°C to 400°C and a heat treatment time of not less than 5 min; or
laser bombarding the initial electrode in a vacuum or an inert gas environment, with a laser intensity of 25 W to 30 W and a treatment time of 1s to 600s.

14. The method according to claim 13, wherein
the initial electrode is plasma treated in a vacuum environment, with a plasma power of 1 kW to 3 kW and a treatment time of 15 min to 30 min; or
the initial electrode is plasma treated in a vacuum environment, with a plasma power of 3 kW to 5 kW and a treatment time of 1 min to 15 min.

15. The method according to claim 13, wherein
the initial electrode is heat treated in a vacuum or inert gas environment, with a heat treatment temperature of 200°C to 250°C and a heat treatment time of 180 min to 300 min; or
the initial electrode is heat treated in a vacuum or an inert gas environment, with a heat treatment temperature of 250°C to 350°C and a heat treatment time of 5 min to 180 min.

16. An electrochemical apparatus, comprising an electrode; wherein
the electrode is the electrode according to any one of claims 1 to 12, or
the electrode is an electrode prepared by using the preparation method according to any one of claims 13 to 15.

17. An electronic apparatus, comprising the electrochemical apparatus according to claim 16.
